# EUROPEAN PATENT APPLICATION

(11) **EP 2 833 339 A1**
(43) Date of publication of application: **04.02.2015**
(21) Application number: 13003761.7
(22) Date of filing: 29.07.2013
(51) Int. Cl.: G09B 9/30, G09B 9/32, G09B 9/02

(54) **Polygonal simulator layout for collective training**

(71) Applicant: Airbus Defence and Space GmbH, 85521 Ottobrunn (DE)
(72) Inventor: Fafard, Fernand, D-85296 Rohrbach (DE)

(57) **Abstract**

A simulation arrangement (100) for simulating a virtual scenario is provided. The simulation arrangement comprises a central area (120) having a multitude of operator positions (122A, 122B, 122C, 122D) and a multitude of display units (110A, 110B, 110C, 110D). The multitude of display units (110A, 110B, 110C, 110D) are arranged as to surround the central area (120). A first display unit (110B) is movable from a closed position to an opened position as to enable an operator to enter or leave the central area, wherein in the closed position the multitude of display units surround the central area. Thus, the simulation arrangement enables a multitude of operators to physically interact with each other when operating within a virtual scenario and the simulation arrangement is adapted to require less space when mounted.

## Description

### Technical Field

The invention relates to the technical field of simulation arrangements and in particular to a simulation arrangement for simulating a virtual scenario for carrying out cognitive and/or behavioural skill training for multiple operators or trainees.

### Background of the invention

Simulation arrangements may be used as training devices for educating one or more operators or users or trainees as well as for mission rehearsal. It should be noted that in the present context of simulation arrangements, the terms operator, user, and trainee are used in a similar manner for those persons using the simulation arrangement. The operators may be trained as to gain cognitive skills or behavioural skills, i.e. as how to behave in a given situation, or for practicing anticipated real-life missions.

A common approach for designing a simulation arrangement suited for presenting a virtual scenario to a multitude of operators or trainees makes use of physically large displays such that all of the operators are able to have a view at the virtual scenario. Such a physically large display may for example be a dome display or dome section with a diameter of 6 m or more as to be large enough to accommodate several operators within its interior space.

Alternatively, a multitude of display units may be located linearly side by side to each other, wherein each operator is being assigned to one of the multitude of display units.

### Summary of the invention

There exist virtual scenarios and training requirements which involve direct physical interaction between the trained operators besides of the actions required in the virtual scenarios. Such direct physical interactions may comprise handing over equipment or other physical existent devices, for example.

The known approaches require a large display unit when a multitude of users or operators is required to look at the display unit at the same time. The result of this requirement may be: the larger a display unit, the greater the distance between the operators in front of the display unit. An increasing distance between the operators may complicate the direct physical interaction between the operators.

The disadvantages of a large display solution are twofold: large building requirements on the one hand and a parallax error between the leftmost and rightmost operators on the other hand.

The alternative linear side by side configuration, while reducing impact on building height, introduces very large distances between individual operators to the point of preventing direct physical interaction.

It may therefore be seen as the object of the invention to provide a simulation arrangement for a multitude of operators which are required to physically interact with each other when operating within a virtual scenario, wherein the simulation arrangement is adapted to require less space when mounted.

This object is being solved by the simulation arrangement according to the independent claim. Further embodiments are described in the dependent claims and the following description.

According to an aspect, a simulation arrangement for simulating a virtual scenario is provided. The simulation arrangement comprises a central area having a multitude of operator positions and a multitude of display units. The multitude of display units are arranged as to surround the central area. A first display unit is movable from a closed position to an opened position as to enable an operator to enter or leave the central area. In the closed position of the first display unit, the multitude of display units surround the central area.

Thus, the display units of the simulation arrangement surround or encircle the operators in an operating state of the simulation arrangement. In the operating state, the first display unit is in the closed position and surrounds the central area.

Each operator is provided with his own display unit. Therefore, the single display units can be made smaller and reduce the demand on building floor space and height. Additionally, due to the circular arrangement of the display units, the operators are physically closer to each other compared to a linear side by side configuration. Thus, the direct physical interaction of the operators is being improved and facilitated.

Further, such a design may allow the visual eye-point reference to be made specific to each of the operators, therefore eliminating parallax error.

In other words, the polygonal circular layout allows the collapse of the physical layout of the individual display units and permits the operators to remain within physical contact range of one another allowing interactions which may not be possible with a linear layout of the display units, i.e. with display units arranged next to each other and having a display surface side by side to each other, that is the display units of the linear layout being viewed by the operators in a similar or parallel line of sight.

When talking about circular arrangement of the display units, this does not mean that the display units are circularly formed or shaped. Quite the contrary, the display units and the according display surface may have any available shape. A circular arrangement means that the display units are arranged circumferentially around the central area and separate the central area or an inside area from a surrounding area or outside area.

It should be noted that the simulation arrangement as described above and hereinafter may be scaled up or down as a function of the number of operators needed for a specific virtual scenario. For example, the simulation arrangement may comprise three, four, five or more single display units, which are inclined to each other as to form a closed loop.

The display unit may be any available display unit adapted for displaying a virtual scenario. The display unit may therefore be a flat screen, a cylindrical screen, a hemispherical screen or a dome display, for example. The display units may use rear or front projection systems.

In other words, the simulation arrangement as described above and hereinafter describes a folded linear type multi user display in a polygon with as many sides as there are display units. A three-display system may basically form a triangle and a four-display system may basically form a square.

The central area or internal space inside of the surrounding display units is small enough to allow the operators to physically interact with one another through direct speech, physical contact like exchanging or sharing equipment and tools, written notes etc., just like the operators would do in the real world when being confronted with a situation as presented in the virtual scenario, and to even guide one another.

The dimension of the polygon sides can be adjusted to match various display sizes or internal area needs such as is required to fit in furniture, for example.

The first display unit may be mounted on rails to facilitate moving the first display unit from the closed position to the opened position and vice verse.

In other words, the individual display units are smaller compared to a large single display unit and compensating for the resulting central area by collapsing the individual operator's areas into a common central area due to the circularly arranged display units.

According to an embodiment, the multitude of display units are arranged as to fully surround the central area in the closed position of the first display unit.

This means that the display surface of the display units represent a closed display surface, which may be merely interrupted by the framework of the display units.

In one embodiment, each display unit is adapted to display a virtual scenario for one operator. In this embodiment, the view points of each operator are identical. In an alternative embodiment, all display units present a combined virtual scenario for all operators. In this alternative embodiment, different azimuth or pointing angle for the displayed view of the virtual scenario are used as to offer a complete 360° view distributed over the entire combined display surface of all the display units. This may include overlap zones between the display units and thus offer references to adjacent operators to create a wide virtual scenario or synthetic world.

According to a further embodiment, the first display unit comprises a hinge as to be movable from the closed position to the opened position.

The hinge may be any suitable means adapted for enabling a movement and in particular a pivoting or swinging movement from the closed position to the opened position of the first display unit. The hinge may comprise a bearing as to facilitate the movement of the first display unit.

According to a further embodiment, the first display unit comprises a locking mechanism which is adapted to lock the first display unit in the closed position.

The locking mechanism therefore holds the first display unit in position after closing the simulation arrangement, i.e. after moving the first display unit from the opened position to the closed position. The locking mechanism may in one embodiment comprise two mechanically interacting members adapted to form fit with each other or to establish a force-type connection with each other.

According to a further embodiment, the locking mechanism is adapted to unlock the first display unit in a default state of the locking mechanism.

In particular in case of absence of power, the first display unit will thus passively move to the opened position or will allow being moved to the opened position. Therefore, in case of loss of power, the operators being in the central area can easily leave the simulation arrangement.

According to a further embodiment, the locking mechanism is adapted to passively unlock the first display unit in the default state of the locking mechanism.

In other words, the locking mechanism is actively held in the locked state, wherein the locking mechanism automatically changes to the unlocked state in case of loss of power. Thus, the unlocked state is the default state and does not require an active initiation as to adopt this state.

According to a further embodiment, each display unit comprises a display surface, wherein the multitude of display units is arranged as to form a continuous display surface in the closed position, which continuous display surface consists of all the display surfaces of the display units.

In this embodiment, a closed virtual scenario may be provided around the central area, i.e. the operators are fully surrounded or enclosed by the virtual scenario.

According to a further embodiment, the continuous display surface fully surrounds the central area in the closed position.

It should be noted that in one embodiment the display units are frameless display units and therefore enable a display surface without or with less disruption or discontinuation. However, in case the display units comprise a frame, the display surface and thus the display virtual scenario will be disrupted at the frame.

According to a further embodiment, the simulation arrangement further comprises a multitude of image projector units, wherein one image projector unit of the multitude of image projector units is assigned to one of the display units of the multitude of display units, respectively.

The projector units are adapted to project an image to the display surface of a respective display unit and may be rear or front projector units. The projector units are adapted to project the virtual scenario to the display units.

According to a further embodiment, a first image projector unit is assigned to the first display unit, wherein the first image projector unit is mechanically decoupled from the first display unit.

This enables a movement of the first display unit, wherein the first projector unit assigned to the first display unit is being kept static so as not to have to keep recalibrating the projector unit after moving the display.

According to a further embodiment, the first display unit is a dome display.

A dome display enables due to its physical dimensions movement of an operator into the dome area towards the display surface, away from the display surface or sideways to the left and to the right.

According to a further embodiment, the simulation arrangement comprises a multitude of workstations, which are assigned to one of the display units, respectively. A first workstation is adapted to control the first display unit such that an operator operating the first workstation interacts with the virtual scenario presented on the first display unit.

The workstations are adapted for controlling the virtual scenario and virtual objects within the virtual scenario. Each of the workstations comprise a multitude of control elements which are adapted for controlling features of a virtual object or for initiating an operation to be performed by the virtual object.

The control elements may in particular be designed as to correspond to control elements of real objects being simulated in the virtual scenario.

According to a further embodiment, the first workstation comprises controlling elements adapted to control a simulated vehicle.

Such control elements may be for example a steering wheel, brake and accelerator pedal or in general operating elements of a vehicle like an aircraft or a ground vehicle.

The control elements may be adapted for the operator of the vehicle as well as for being used by a co-driver or passenger of the vehicle. In other words, a real environment and the user interface of this real environment may be transferred to the design of the control elements of the simulation arrangement.

### Brief description of the drawings

Below, exemplary embodiments of the invention are depicted with reference to the drawings, of which:
- **Fig. 1**: schematically illustrates a simulation arrangement according to an exemplary embodiment;
- **Fig. 2**: schematically illustrates a simulation arrangement according to a further exemplary embodiment.

### Detailed description of embodiments

The illustrations in the drawings are schematic and not to scale.

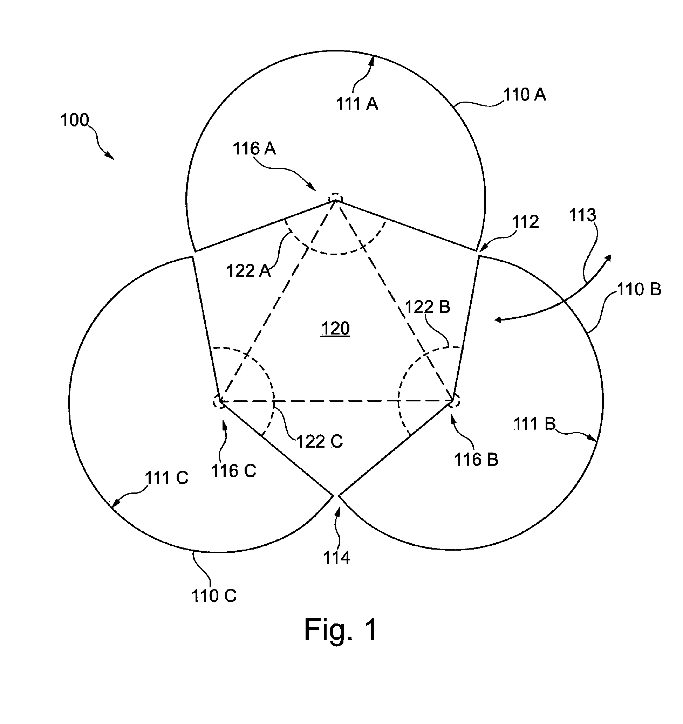

Fig. 1 illustrates a simulation arrangement 100 having three display units 110A, 110B, 110C which are arranged such that they substantially form a triangle. The display units 110A, 110B, 110C fully surround the central area 120 in which the operators are being located when using or operating the simulation arrangement 100.

The first display unit 110B may be moved from the closed position, which is shown in Fig. 1, in a direction indicated by arrow 113 to the opened position such that the operators are enabled to ingress or egress the central area.

When opening or closing the first display unit 110B it may be rotatably moved about the hinge 112. After being closed, the locking mechanism 114 holds the first display unit 110B in the closed position.

Each of the display units 110A, 110B, 110C comprises a display surface 111A, 111B, 111C and a projector unit 116A, 116B, 116C, respectively, for presenting a virtual scenario. The projector units may be arranged close to the central point of each dome display.

The operator's position 122A, 122B, 122C can be varied within a given range, as schematically illustrated by the circular dashed lines.

Each dome display may be 3 m in diameter with 220° field of view, for example. In this configuration, the distance between the central points of the individual dome displays is 2,33 m, which distance is indicated by the linear dashed lines forming a triangle.

The polygonal configuration of the simulation arrangement 100 provides natural access for installation and maintenance ensuring a compact configuration of the simulation arrangement with regard to the overall dimensions. All operators are within about 2,3 m from one another, well within earshot and arms' reach.

In contrary to the embodiment shown in Fig. 1, a linear configuration of a three-display configuration the leftmost and rightmost operators are more than 6 m apart from each other.

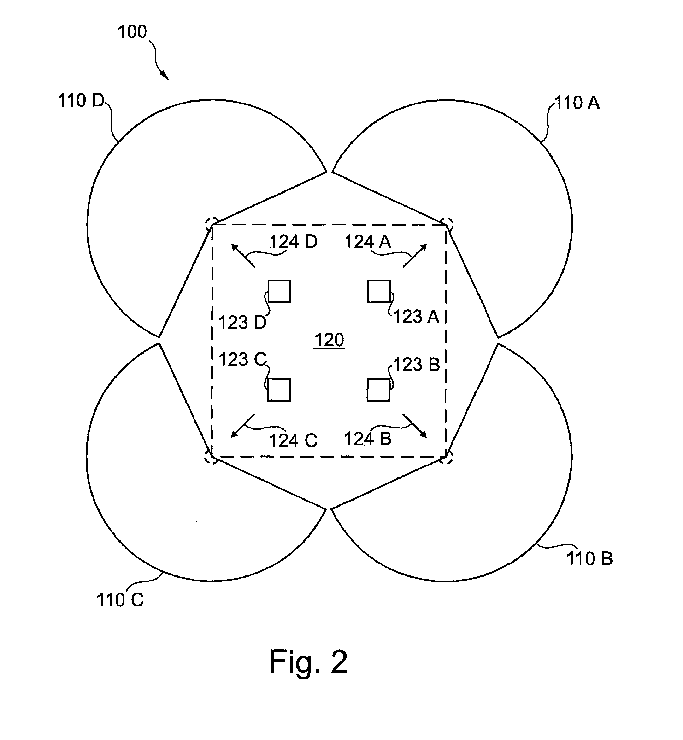

Fig. 2 illustrates a four-display configuration of a simulation arrangement 100, wherein the four display units 110A, 110B, 110C, 110D are arranged such that they substantially form a rectangle or a square.

Within the central area 120, four workstations 123A, 123B, 123C, 123D are arranged which are adapted to control the virtual scenarios illustrated at the four display units 110A, 110B, 110C, 110D, respectively. In an operating state of the simulation arrangement, the operators are located such that their lines of sight 124A, 124B, 124C, 124D are directed towards the display surface of the display unit assigned to the operators, respectively. However, it should be noted that the operators may change place and share the view to one or more display units in case the virtual scenario requires interaction between two or more operators.

Assuming the same display unit dimensions as in Fig. 1, the distance between the central points of the dome displays interconnected with the rectangular shaped dashed lines is about 2,75 m.

The operators can freely move in the central area 120. In particular, the operators can move sideways to physically interacting like for example for exchanging or sharing equipment like simulated binoculars, radio controls or the like.

In one embodiment, the simulation arrangement comprises tables or seating areas in the central area, which tables or seating areas are used as workstations for controlling the virtual scenario.

The workstations may simulate a vehicle with additional resources and maybe even static operators with limited need for direct view of the scenario.

The dimensions of the inner space may be enlarged or varied by spreading the display units further apart.

### List of reference signs

- 100: simulation arrangement
- 110: display units
- 111: display surfaces
- 112: hinge/bearing
- 113: opening/closing movement
- 114: closing/locking mechanism
- 116: image projector units
- 120: central area
- 122: operator's position
- 123: workstations
- 124: line of sight

## Claims

1. Simulation arrangement (100) for simulating a virtual scenario, comprising:
a central area (120) having a multitude of operator positions (122A, 122B, 122C, 122D);
a multitude of display units (110A, 110B, 110C, 110D);
wherein the multitude of display units (110A, 110B, 110C, 110D) are arranged as to surround the central area (120);
wherein a first display unit (110B) is movable from a closed position to an opened position as to enable an operator to enter or leave the central area;
wherein in the closed position the multitude of display units surround the central area.

2. Simulation arrangement (100) according to claim 1,
wherein the multitude of display units (110A, 110B, 110C, 110D) are arranged as to fully surround the central area (120) in the closed position of the first display unit.

3. Simulation arrangement (100) according to any one of claims 1 or 2,
wherein the first display unit (110B) comprises a hinge (112) as to be movable from the closed position to the opened position.

4. Simulation arrangement (100) according to any one of the preceding claims,
wherein the first display unit (110B) comprises a locking mechanism (114) which is adapted to lock the first display unit (110B) in the closed position.

5. Simulation arrangement (100) according to claim 4,
wherein the locking mechanism (114) is adapted to unlock the first display unit (110B) in a default state of the locking mechanism.

6. Simulation arrangement (100) according to claim 5,
wherein the locking mechanism (114) is adapted to passively unlock the first display unit (110B) in the default state of the locking mechanism.

7. Simulation arrangement (100) according to any one of the preceding claims,
wherein each display unit comprises a display surface (111 A, 111 B, 111 C);
wherein the multitude of display units is arranged as to form a continuous display surface in the closed position, which continuous display surface consists of all the display surfaces.

8. Simulation arrangement (100) according claim 7,
wherein the continuous display surface fully surrounds the central area in the closed position.

9. Simulation arrangement (100) according to any one of the preceding claims,
wherein the simulation arrangement further comprises a multitude of image projector units (116A, 116B, 116C);
wherein one image projector unit of the multitude of image projector units is assigned to one of the display units of the multitude of display units, respectively.

10. Simulation arrangement (100) according to claim 9,
wherein a first image projector unit (116B) is assigned to the first display unit (110B);
wherein the first image projector unit is mechanically decoupled from the first display unit.

11. Simulation arrangement (100) according to any one of the preceding claims, wherein the first display unit is a dome display.

12. Simulation arrangement (100) according to any one of the preceding claims,
comprising a multitude of workstations (123A, 123B, 123C, 123D), each of the workstations assigned to one of the display units;
wherein a first workstation (123B) is adapted to control the first display unit (110B) such that an operator operating the first workstation interacts the virtual scenario presented on the first display unit.

13. Simulation arrangement (100) according to claim 12,
wherein the first workstation comprises controlling elements adapted to control a simulated vehicle.
